# EUROPEAN PATENT SPECIFICATION

(11) **EP 2 505 527 B1**
(45) Date of publication and mention of the grant of the patent: **06.05.2015**
(21) Application number: 12161651.0
(22) Date of filing: 28.03.2012
(51) Int. Cl.: B65G 47/14

(54) **Lifting device for emptying a hopper**
Hubvorrichtung zum Entleeren von Behälter
Dispositif de levage pour vider un conteneur

(30) Priority: 30.03.2011 IT BS20110035; 03.01.2012 IT BS20120001
(43) Date of publication of application: 03.10.2012
(73) Proprietor: Automazioni Industriali S.R.L., 25075 Nave, Brescia (IT)
(72) Inventor: Baglioni, Giuliano, I-25075 Nave, BRESCIA (IT)
(74) Representative: Pulieri, Gianluca Antonio

(56) References cited:
- EP-A1- 1 652 799
- WO-A1-02/02410
- BE-A2- 894 577
- DE-A1- 3 233 658
- DE-A1- 4 025 391
- DE-A1- 19 917 923
- FR-A1- 2 837 187
- GB-A- 2 390 591
- US-A- 5 236 077
- US-A- 5 653 570

## Description

The present invention relates to a lifting machine on a line processing mechanical pieces.

Automated processing lines are known of, the purpose of which is to shift finished parts or parts to be processed, assembled or to be assembled from one zone to another of the factory.

Specifically, conveyor belts, chutes, lifting machines etc may be found on the processing lines.

Not only must the pieces be moved but this must be done in as ordered a manner as possible; in particular it is often very useful for them to be moved one at a time or a few at a time or even for the various pieces to be moved in a preferred position, often for processing purposes.

The operation during which the pieces are ordered one by one and in some cases even in a specific position is known as singularisation.

In the prior art singularisation is performed during the movement of pieces and in particular during their movement along conveyor belts, as opposed to chutes or the like.

In fact during their movement a certain quantity of pieces encounter one or more obstacles which prevent them from continuing in a certain direction; the purpose of said obstacles is to make sure that only singularised pieces proceed, that is, one at a time.

In particular, some of the moved pieces are blocked, slowed down or deviated.

The pieces may in fact be blocked or slowed down by obstacles transversal to the direction of movement; for example said transversal obstacles are funnel shaped so that only one piece at a time may pass through them. Other pieces are rather forced to change direction; for example a quantity of pieces is deviated, as in excess, upstream of the movement means, by special recovery deviators.

Or again, there are holes along the direction of movement which the non-singularised and therefore excess pieces fall into, to return upstream.

Special machinery suitable for performing singularisation is also used, for example vibrating conveyor belts for such purpose are known of, so that the various pieces transported are moved, vibrating in one direction rather than another.

In the prior art the purpose of lifting machines is to shift a certain random quantity of pieces from an initial height to a final height.

In particular, among such lifting machines plate lifters are known of. Plate lifting machines are machines in which at least one plate is suitable for translating continuously.

The pieces are loaded onto and subsequently unloaded from the lifting machine, in a random manner.

For the singularisation requirements spoken of, the use of recovery deviator elements suitable for returning the non-singularised pieces upstream of the lifting machines is widespread. This way such pieces will subsequently be re-loaded by the lifting machine and subsequently re-unloaded at the greater height.

Achieving singularisation in the aforementioned manners has a number of drawbacks.

In particular the use of such expedients makes some pieces follow the route of the lifting machine, being raised by it several times; at every cycle the pieces are subject to a series of impacts which cause damage, clearly, undesirable.

In addition the entire system is impractical in that the lifting machine continues to function following its unloading cycle regardless of whether such is necessary. A machine of such type is therefore not optimised, with the risk of an unnecessary waste of time and money, entailing a waste of energy as well as the aforementioned problem of impacts on the pieces.

An example of lifting machine typical of the prior art is shown in document EP 1 652 799 A1, which discloses a lifting machine according to the preamble of claim 1.

The purpose of the present invention is to make a lifting machine with increased efficiency.

Such purpose is achieved by a lifting machine according to claim 1. The invention also concernes apparatuses with such a lifting machine, and a corresponding method.

The characteristics and advantages of the lifting machine and of the method according to the present invention will be evident from the description below, made by way of a non-limiting example, in accordance with the appended drawings, wherein:

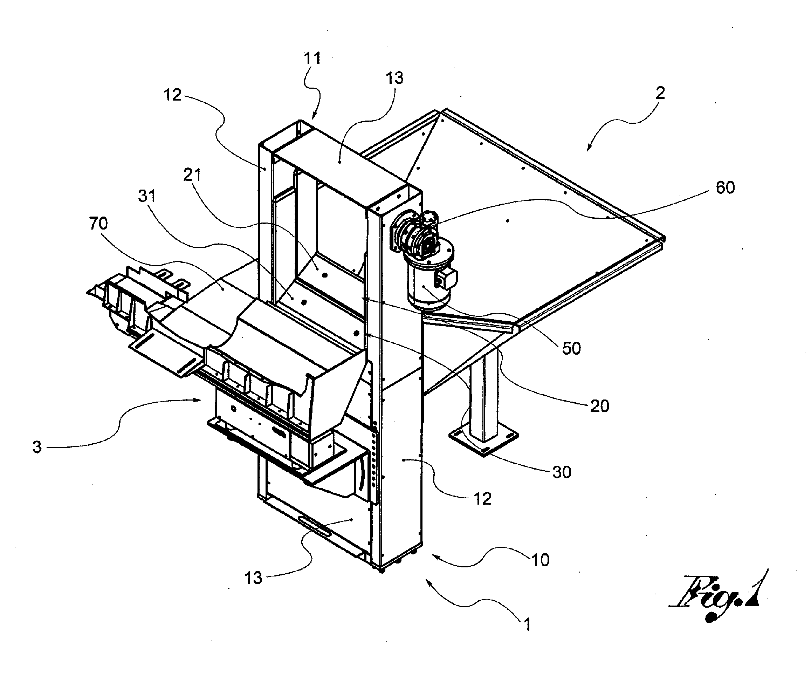

- figure 1 is a perspective view of an apparatus comprising a lifting machine in its entirety, according to a preferred embodiment;

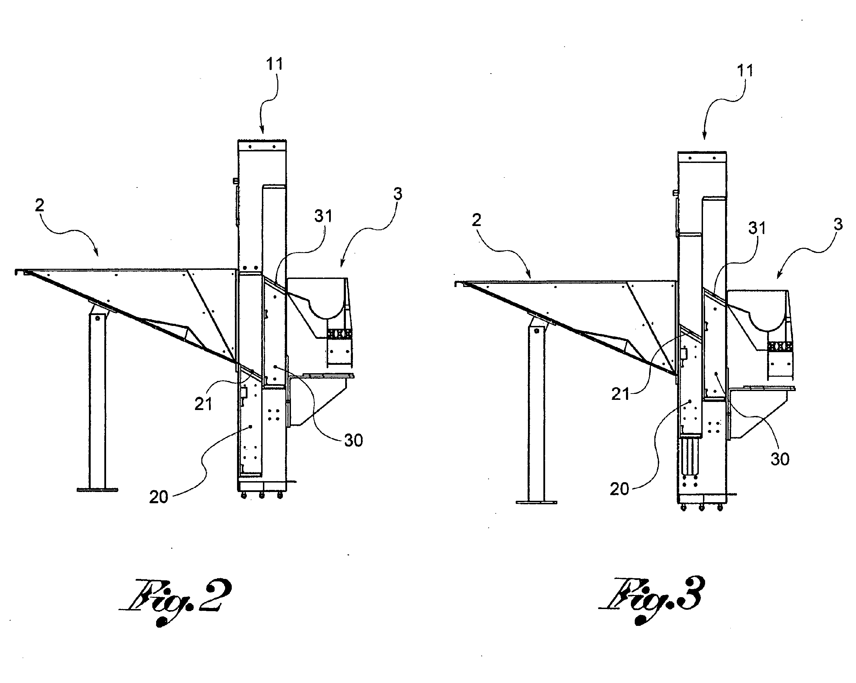

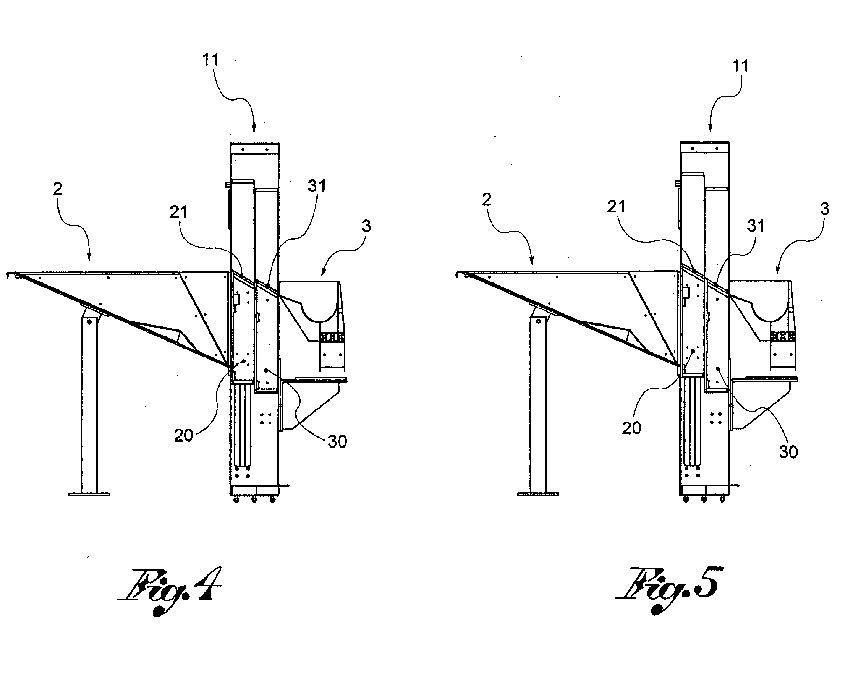

- figures 2, 3, 4 and 5 show four cross-sections of the apparatus shown in figure 1, wherein the lifting machine is respectively in a loading position, an intermediate position, a second intermediate position (of incipient unloading) and an unloading position ;

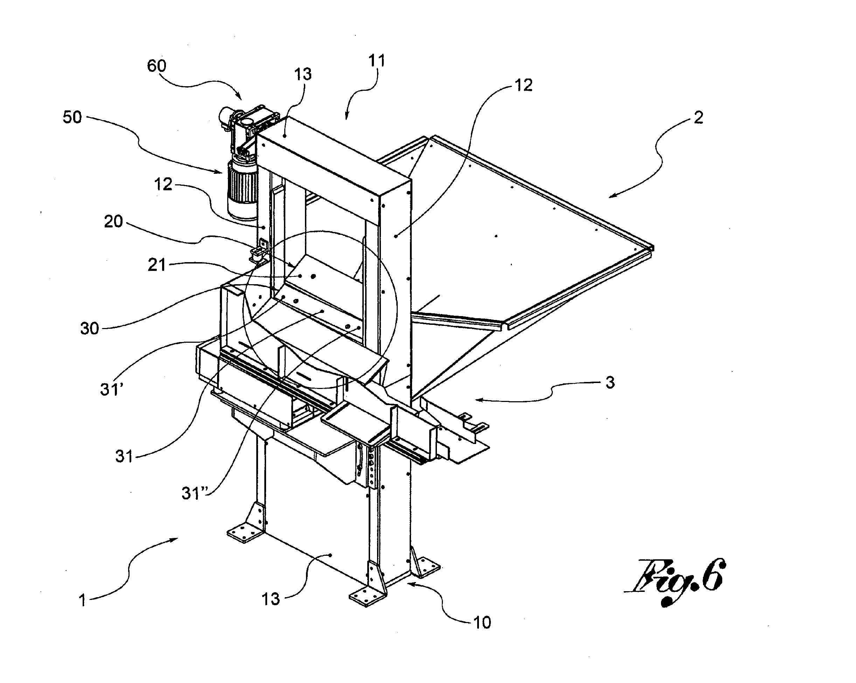

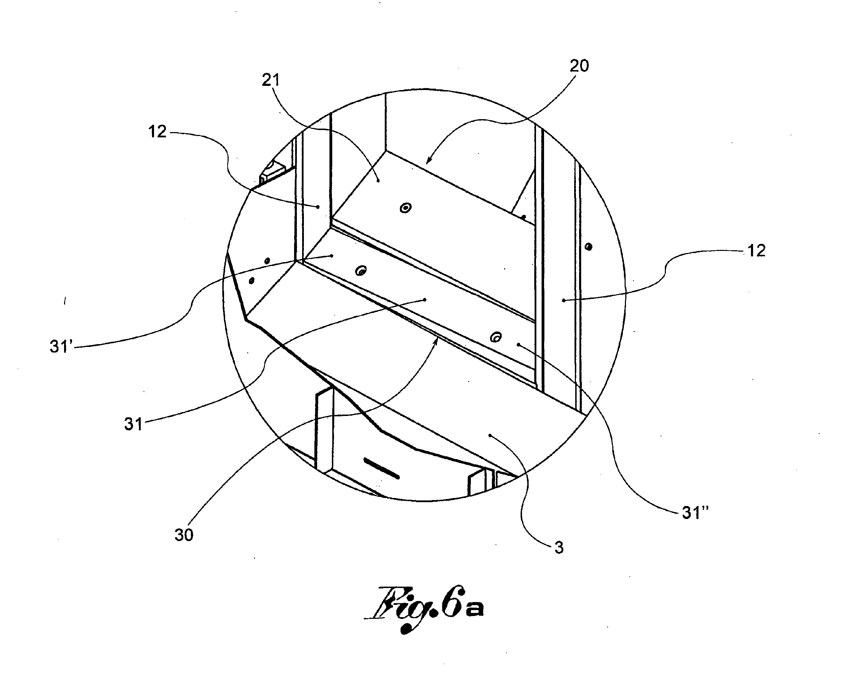

- figure 6 is a perspective view of an apparatus comprising a lifting machine in its entirety, according to a further preferred embodiment;

- figure 6a is an enlargement of a detail of the lifting machine shown in figure 6;

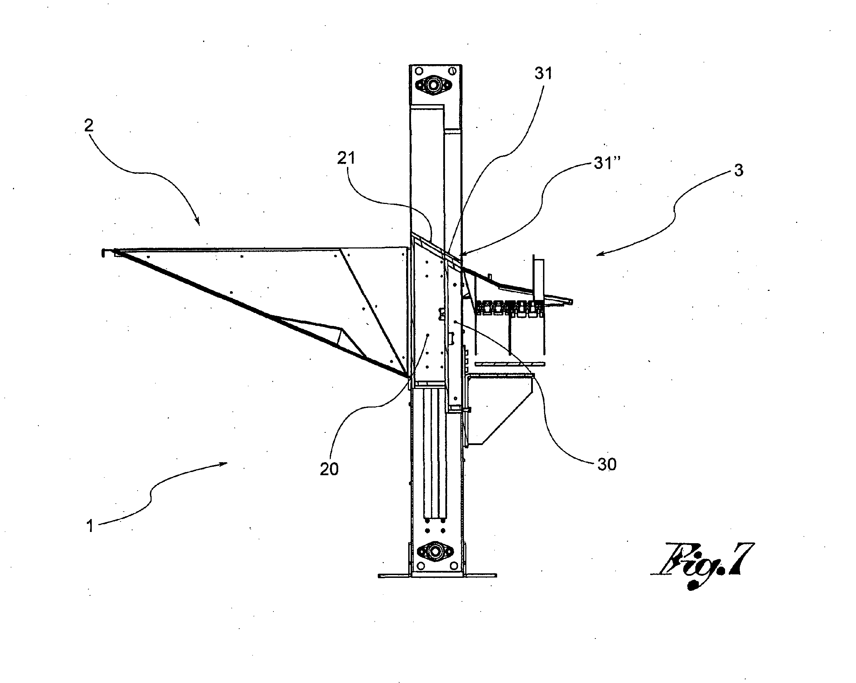

- figure 7 shows a cross-section of the apparatus shown in figure 6, in which the lifting machine shown is in an unloading position;

- figures 8 and 9 show two perspective views of an apparatus comprising a lifting machine in its entirety, according to yet a further preferred embodiment, respectively in two processing positions;

- figures 8a and 9a are, respectively, two enlargements of a detail of the lifting machine shown in figures 8 and 9;

- figure 10 shows a cross-section of the apparatus shown in figure 9, in which the lifting machine shown is in an unloading position.

Generally speaking specific apparatuses are included in the processing lines of mechanical pieces suitable for moving the pieces.

With reference to the appended drawings, an apparatus 1 comprises a lifting machine 10 according to the invention, a loading area, suitable for receiving pieces to be lifted, and an unloading area, located higher up than the loading area, suitable for receiving the lifted pieces.

In a preferred embodiment the loading area consists for example of a hopper 2, which forms the area suitable for receiving the pieces to be lifted. While the unloading area consists of a chute 3 located higher up than the loading area.

In possible embodiment variants the loading area and/or the unloading area consist of an area on the belt of a conveyor belt.

The lifting machine 10 is, in one embodiment, positioned between the loading area and the unloading area.

In particular, the lifting machine 10 comprises a frame 11 consisting of vertical uprights 12 and crossbars 13.

The vertical uprights 12 consists of box-like elements made by joining one or more sheets, for example made of metal, or consist of sections.

The crossbars 13, positioned preferably at the ends of the uprights 12, are obtained by means of metal elements suitable for being attached between two facing uprights 12 so as to attach them to each other.

The loading area and unloading area are associable to opposite sides of the frame 10; for example, the hopper 2 and the chute 3 are attached, for example by bolts and screws, to two sides of the frame 10.

In order to move the pieces from the loading area to the unloading area the lifting machine 10 comprises translatable support means suitable for supporting at least one piece and suitable for translating from the height of the loading area to the height of the unloading area; the loading position is the position in which the translatable support means are at the height of the loading area and the unloading position is the position in which the translatable support means are at the height of the unloading area.

Said translatable support means are, in a preferred embodiment, positioned between the vertical uprights 12.

In the loading position, the translatable support means are suitable for receiving at least one piece falling from the loading area. In the unloading position, the translatable support means are suitable for allowing or encouraging falling of the piece into the unloading area.

Preferably said falling of the pieces is provoked by the force of gravity.

According to the invention, said translatable means comprise a translatable plate 20. Said translatable plate 20 is suitable to support at least one piece and to translate between the loading position and the unloading position.

The translatable plate 20 is positioned in a substantially vertical position.

In other words, the translatable plate 20, which by definition has two dimensions prevailing over the third, translates keeping the surfaces identified by the two prevailing dimensions substantially vertical (orthogonal to the support surface of the machine). The pieces are therefore supported on the third dimension of the translatable plate 20, the thickness. In other words, the translatable plate 20 has an upper surface 21, for example as wide as it is thick, suitable for supporting at least one piece.

Said upper surface 21, when the translatable plate 20 is in the loading position, has at least a part below the height defining such position; said portion is suitable for supporting and receiving pieces falling, for example as a result of the force of gravity, from the height of the loading area. The translatable plate 20 is suitable to translate until said part is above the height defining the unloading position.

In other words, the upper surface 21 of the translatable plate 20 is inclined in such a way as to be suitable for receiving at least one falling piece, preferably by means of the force of gravity, from the loading area and to permit or encourage the falling, again preferably by means of the force of gravity, of the piece for example into the unloading area following translation of the translatable plate 20.

According to the present invention, the lifting machine 10 comprises at least one obstruction element, suitable for obstructing the unloading or falling of pieces lifted by the translatable support means to the unloading area; the obstruction element is at the unloading area, preferably positioned between the translatable support means and the unloading area.

Preferably the obstruction element is shaped to allow some lifted pieces to fall into the unloading area before others.

According to the invention, said obstruction element is a fixed plate 30, fitted to the frame, preferably between the uprights 12.

Similarly to the translatable plate 20 the fixed plate 30 also has an upper portion 31.

The upper portion 31 of the fixed plate 30 is inclined in such a way as to encourage the falling or unloading of the pieces lifted by the translatable support means.

In a preferred embodiment the upper portion 31 of the fixed plate 30 has the same inclination as the upper surface 21 of the translatable plate 20, in such a way as to continue, in the same direction, for example by means of the force of gravity, the falling or unloading once the translatable support means are in the unloading position.

In a further embodiment, the upper portion 31 of the fixed plate 30 is shaped so as to have some areas suitable for blocking the unloading or falling of a quantity of lifted pieces and other areas which permit such.

In fact, in a further embodiment, the upper portion 31 of the fixed plate 30 is further inclined in its extension direction, diversely from as illustrated above wherein the inclination is present along the thickness of the same.

For example the upper portion 31 is inclined transversally to the first direction of inclination; in the case in point the upper portion 31 of the fixed plate 30 is also inclined in its extension direction; in other words, the upper portion 31 of the fixed plate 30 is also inclined along the greater extension of the thickness.

In other words, the upper portion 31 of the fixed plate 30 is inclined in relation to the frame 11, in particular in relation to the two vertical uprights 12; that is the ends of the upper portion 31 next to the vertical uprights 12 are at different heights.

In particular, a lower upper end 31' and a higher upper end 31" are identified, positioned at different heights from each other, respectively the former at a lower height than the other.

In a preferred embodiment the translatable support means are moved by movement means in turn housed in and/or on the frame, preferably in the vertical uprights. Said movement means are suitable for moving the translatable support means between the loading position and the unloading position.

The movement means are suitable for stopping the translatable support means in an intermediate position and for moving the support means at the chosen speed. Specifically the speed of movement is advantageously variable along the stroke of the translatable support means.

The intermediate position is a position assumed by the translatable support means between the loading and unloading position respectively at a height between the height of the loading area and the height of the unloading area.

In the intermediate area the falling of the lifted pieces to the unloading area is prevented by the obstruction element.

As a result the translatable support means are suitable for assuming an incipient unloading position. Said incipient unloading position is in other words one of the intermediate positions which can be assumed by the translatable support means.

The incipient unloading position is near the unloading area. Such position is the last position in which falling of a piece lifted by the translatable support means into the unloading area is still prevented by the obstruction element.

In a preferred embodiment the movement means comprise a motor 50.

In particular, said motor is an electric motor. For example the electric motor is a brushless motor.

In a preferred embodiment the electric motor 50 is mounted on the frame 11. In particular, it is mounted laterally, for example above, on an upright 12.

In addition, preferably, the movement means also comprise a reducer 60 suitable for reducing the number of revs in output from the electric motor so that the motion is easily transferred to the transmission means.

In addition, the movement means comprise transmission means of the motion suitable to transmit the rotatory movement of the electric motor to the translatory movement of the translatable support means.

In a preferred embodiment the transmission means are housed in the frame and are connected to the translatable support means in such a way as to move them.

In particular, said transmission means is a system, comprising for example a chain or belt, suitable for being moved by an electric motor. The chain or belt is in fact moved by the electric motor 50 or by the gear motor 60 to which it is connected; rotation of the motor is thereby accompanied by a linear shift of the translatable support means.

In a preferred embodiment the transmission means symmetrically provide elements suitable for the transformation of motion; for example, two belts or chains, one for each side of the translatable support means, preferably housed inside the uprights, are envisaged. The motion of the motor is transmitted to both the belts or chains by a transmission shaft which, starts from the electric motor or from the gear motor and extends transversally to the uprights on either side of the frame. For example the transmission shaft is housed in the crossbar, preferably upper, of the frame.

In addition, the lifting machine 1 which the present invention relates to comprises control means suitable for controlling the movement means.

Said control means preferably comprise an electronic system, suitable for controlling the electric motor, in such a way as to turn it on or off depending on the operating situation, on the positions assumed by the translatable support means, or on the quantity of pieces in the loading or unloading areas.

Specifically, the control means are associated with detection means.

In fact, the lifting machine also comprises detection means, operatively connected to the control means, suitable for detecting the presence of lifted pieces in the unloading area.

The detection means are suitable, depending on what is detected, for sending a detection signal to the control means which moves the translatable support means depending on such detection signal.

In detail, said detection means comprise artificial viewing means such as telecameras or the like, or laser systems, encoders, photo cells etc.

The detection means are thereby sensitive to the presence or absence of lifted pieces unloaded or allowed to fall by the translatable support means into the unloading area which they are able to detect the presence of.

In other words, the detection means make a corresponding signal to the control means, depending on detection of the presence or absence of lifted pieces in the unloading area. The control means being suitable to control the movement means move or stop the latter making the translatable support means translate or not.

In a preferred embodiment the detection means send a signal to the control means when they detect the absence of lifted pieces in the unloading area; depending on this signal, the control means control the movement means in such a way as to move the translatable support means into the unloading position.

In a further embodiment, the movement means move the translatable support means at a controlled speed so as to dose the falling of the quantity of preferably mechanically lifted pieces.

As said in fact the translatable support means can be stopped by the movement means in the incipient unloading position and their speed of translation can be regulated by means of the movement means.

According to the invention, the translatable support means are stopped in the incipient unloading position when the detection means detect the presence of lifted pieces in the unloading area; vice versa when the detection means detect the absence of lifted pieces in the unloading area they send the signal to the control means which in turn command the movement means to move the translatable support means stopped in the incipient unloading position towards the unloading position.

Consequently the incipient unloading position is a "waiting" position in which the translatable support means are stopped in the case in which the presence of lifted pieces in the unloading area is detected, until the exit of the lifted pieces from the unloading area is detected.

In the embodiment in which the upper portion 31 of the fixed plate 30 is also inclined along its extension; and therefore has the lower upper end 31' and the higher upper end 31", the incipient unloading area is further partialised.

Specifically in fact the translatable support means are suitable to obstruct incrementally depending on their shape, in particular on their inclination, the falling of mechanical pieces, dosing it further.

In such configuration, when several pieces are moved by the translatable plate 20 contemporarily, those pieces near the area at a lower height of the obstruction element will fall into the unloading area first from the aforesaid translatable plate 20. In other words, of the pieces moved by the translatable plate 20 positioned on the upper surface 21 the first which will fall, after crossing the upper portion 31 of the fixed plate 30, are those near its lower upper end 31'.

In other words, the translatable support means are suitable for being commanded in their movement, as illustrated above, in such a way as to minimise the waiting times in the unloading operation as much as possible.

In a preferred embodiment singularisation is facilitated, if not performed entirely, by the lifting machine 10, which performs unloading of the lifted pieces, or dosing of the unloading of lifted pieces, only if necessary, in other words only if the detection means detect the absence of lifted pieces.

In particular, the quantity of lifted pieces unloaded in the unloading area is a function of the ratio of dimensions of the pieces-dimensions of the translatable support means; in a preferred embodiment it is a function of the ratio of dimensions of the pieces-thickness of the translatable plate.

If the lifting machine 10 which the present invention relates to lifts one piece at a time, and above all unloads said lifted piece only when necessary: singularisation will not be performed, as happens in the prior art downstream of the lifting machine 10, because performed by the lifting machine 10 itself.

In the case in which the lifting machine 10 lifts more than one piece at a time, this is suitable for dosing the unloading of one or more pieces depending on the findings of the detection means; in this case too the singularisation operation downstream of the lifting machine 10 is not necessary or is at most minimised.

In addition, the lifting machine 10 is suitable for performing singularisation also exploiting the shape of the obstruction element.

For example by exploiting first unloading areas, identifiable near the lower upper end 31' rather than last incipient unloading areas identifiable near the higher upper end 32".

In any case, in some embodiments, the apparatus comprises recovery means suitable for making the pieces fall back from the unloading area to the loading area; in particular said recovery means are special chutes 70.

Similarly to the apparatus, the present invention also relates to a method of transport of preferably mechanical pieces on a processing line.

According to the invention, the method of transport of preferably mechanical pieces comprises the steps of:

- receiving from a pieces loading area;

- detecting by detection means the presence of the mechanical pieces in an unloading area, in such a way that said detection means send a detection signal of a condition of presence or absence of pieces;

- moving the pieces received from the loading area, from the height of said loading area to the height of the unloading area depending on the detection signal.

Moreover, the method of transport of pieces comprises the steps of:

- stopping the movement of the pieces in an intermediate position at a height between the height of the loading area and the height of the unloading area, if the condition of presence or absence of mechanical pieces is detected by the detection means;

- resuming from said intermediate position the movement of the pieces depending on how said condition changes.

The machine which the present invention relates to is suitable for performing such steps of said method at different and controllable speeds and is therefore suitable to dose the lifted pieces, unloading them as required, in the unloading area.

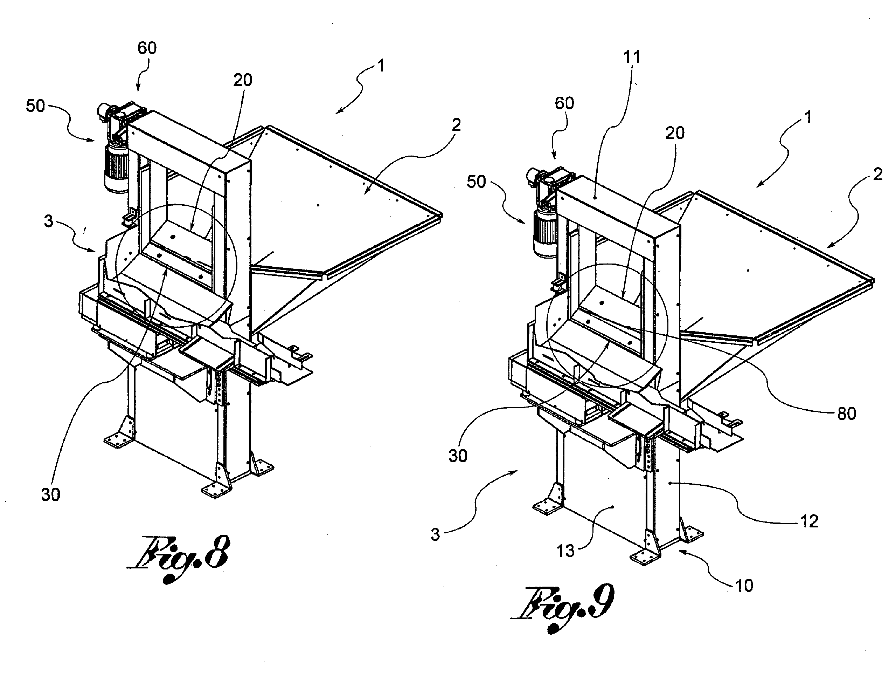

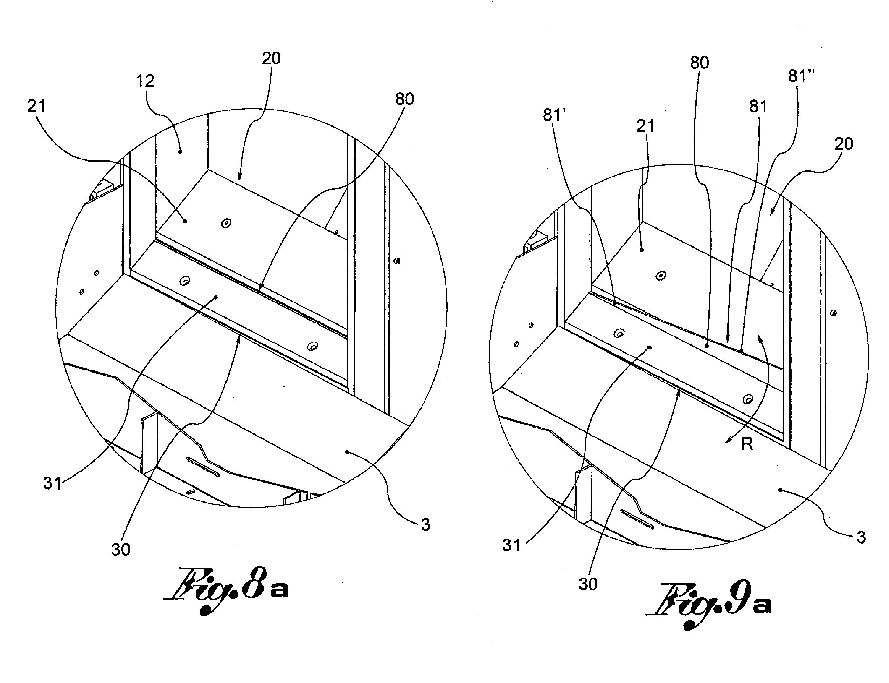

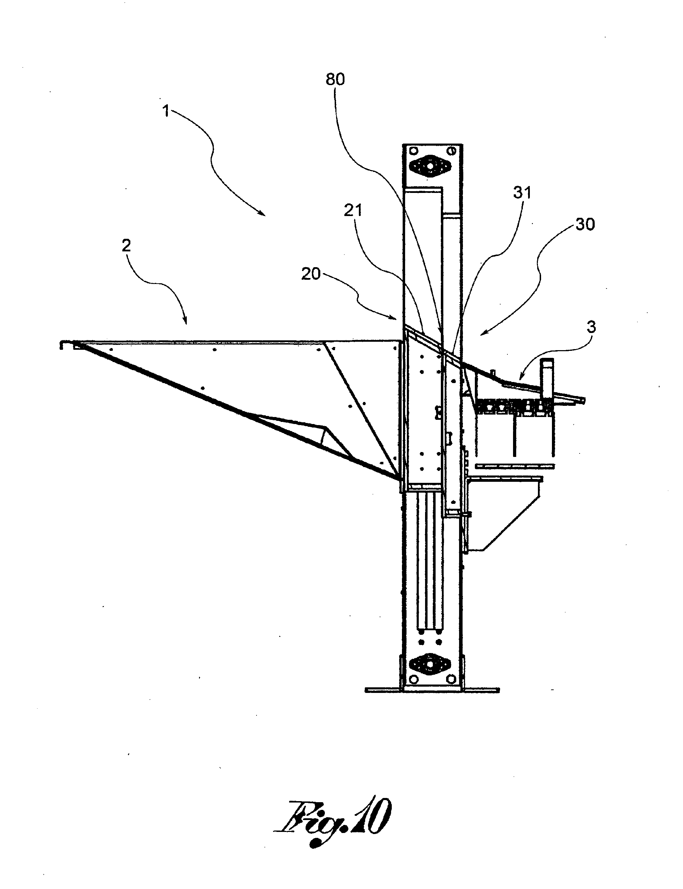

In a further embodiment variation, such as that shown by way of example in figures 8 to 10, the obstruction element comprises at least one partition 80, positioned in a substantially vertical position.

Preferably the partition 80 is positioned downstream of the translatable support means.

Preferably the partition 80 is positioned upstream of the fixed plate 30.

In a preferred embodiment the partition 80 comprises an upper flap 81 having at least a portion suitable for projecting at a height greater than the loading area.

Preferably, the partition 80 comprises an upper flap 81 shaped so as to have some areas suitable for blocking, or obstructing, unloading or falling of the pieces and other areas which permit such.

In a preferred embodiment the upper flap 81 of the partition 80 comprises a fulcrum area 81' and an obstruction area 81".

Preferably the fulcrum area 81' and the obstruction area 81" can be positioned at different heights from each other, respectively the fulcrum area 81' can be positioned or is positioned at a lower height than the obstruction area 81" where the pieces are free to fall.

In one embodiment in fact the partition 80 can be mounted on the translatable support means. Or the partition 80 can be mounted on the fixed plate 30.

In a preferred embodiment the partition 80 is suitable for being moved in such a manner that the fulcrum area 81' reaches, or has, as maximum height the unloading height, while the obstruction area 81" reaches a higher height.

For example the partition 80 can be moved by means of special partition movement means (not shown) in parallel with the translatable support means.

Or again, the partition 80 can be moved by means of special partition movement means (not shown) in such a way that it is rotatable, for example along a trajectory R so that it is possible to use it depending on whether there is a need for it or not.

In a preferred embodiment the partition movement means are controllable by special control means. Or again, the partition movement means can be controlled by the control means.

As a result, in one embodiment the partition 80 just as the translatable support means are controllable by the control means depending on the detection signal.

In yet a further embodiment variation, the lifting machine 10 comprises an obstruction element which in turn comprises both the fixed plate 30 and the partition 80.

In addition, in one embodiment variation (not shown in the drawings) it is the translatable means which are positionable or shaped to allow some lifted pieces to fall into the unloading area before others.

For example the upper surface 21 of the translatable plate 20 is shaped so as to have some areas suitable for favouring the unloading or falling of pieces and other areas which limit such, inasmuch as obstructed by the obstruction element.

In particular, in the same way as illustrated in relation to the embodiment with the shaped fixed plate 30, the translatable plate 20, in a further embodiment, is also shaped ad hoc.

For example the upper surface 21 comprises a lower upper area and a higher upper area positioned at different heights from each other, respectively the former at a lower height than the other. This way the pieces positioned on the higher upper area will fall into the unloading area before those positioned on the lower upper area which is more obstructed by the obstruction element.

In other words again in said embodiment in which the upper portion 21 of the fixed plate 20 is inclined along its extension direction.

Innovatively the lifting machine which the invention relates to is suitable for limiting and preferably overcoming the problem of singularisation optimising the times of the aforesaid operation, being suitable for dosing the lifted pieces, as needed.

Advantageously the lifting machine which the invention relates to performs singularisation, lifting one or more pieces at a time, preventing the pieces from suffering impacts on account of the means performing the singularisation typical of the prior art.

Advantageously the lifting machine which the invention relates to performs a dosing, unloading a predefined quantity of pieces at a time and preventing them from suffering impacts on account of the means performing the singularisation typical of the prior art.

Advantageously the lifted pieces are unloaded into the unloading area only if necessary, entailing optimisation and clear benefits in terms of movement times.

Advantageously the control means move the translatable support means depending only on the detection signal sent by the detection means.

Advantageously an obstruction element is present suitable for obstructing the unloading or falling of the lifted pieces, so that until said obstruction has been passed no pieces are unloaded.

Advantageously said obstruction element is designed in such a way as to incrementally obstruct the falling of the lifted pieces; in particular in the case in which several pieces are lifted contemporarily.

Advantageously said incremental obstruction is achieved by shaping the obstruction element in such a way that a large number of pieces reach the unloading area before others which instead remain in the incipient unloading area. The lifting machine thereby advantageously doses the unloading even if working continuously.

Advantageously for example in the embodiment comprising the partition, rather than shaping the obstruction element ad hoc, this can be moved in such a way that a large number of pieces reach the unloading area before others which instead remain in the incipient unloading area. This way, advantageously, the lifting machine doses the unloading even if working continuously.

However, advantageously, the lifting machine may also not work continuously.

Advantageously the translatable support means can be stopped by the movement means in an intermediate position. Advantageously the translatable support means are stoppable by the movement means in an incipient unloading position. In both said positions unloading is prevented by the obstruction element.

Advantageously in a preferred embodiment the movement is of the electronic type; it is therefore suitable for being controlled and is controllable in such a way as to have constant control of the position in rotation of the motor and thereby of the means connected to it.

Advantageously the unloading of the pieces is performed with a substantial saving in time in that the translatable support means are positionable in the incipient unloading area.

In an alternative embodiment the movement is of the pneumatic type and is therefore controllable in such a way as to control the position of the means connected to it. In particular, valve means suitable for choking the flow of air of the pneumatic system are envisaged, regulating the speed of movement of the translatable support means.

Advantageously the translatable support means are suitable for receiving a piece falling from the loading area; they are in addition advantageously suitable for allowing or encouraging falling of said pieces into the unloading area; advantageously the obstruction element is also suitable for allowing or encouraging falling of the piece into the unloading area, once it has been passed. Said means and elements are in fact shaped in such a way as to have an inclination which permits the aforesaid uses.

Advantageously the dimensions of the lifting machine are greatly inferior to those typical of the lifting machines of the prior art. In particular, in the lower area, near the support surface, where in the prior art the pneumatic and mechanical mechanisms are situated, no space is occupied thanks to the fact that the movement means are attached and housed inside the frame.

Advantageously the electronic movement can be controlled in such a way that upon reaching the end stroke, loading and unloading position or any intermediate positions, the translatable support means are slowed down so as to prevent impacts or jolts of the pieces supported.

Advantageously the translatable support means are suitable for being blocked in a preferred position; for example they may be placed in such a way that relative to the shape, for example the inclination of the obstruction element, a part of them allows the unloading of the pieces while the other part keeps the pieces in the incipient unloading position. In a preferred embodiment the translatable plate is suitable for lifting several pieces contemporarily, but on account of the inclination of the upper end of the fixed plate, a quantity of the aforesaid pieces reaches the unloading area before the others. This way the pieces fall, by means of the force of gravity, into the unloading area in a further controlled manner.

Similarly, in a preferred embodiment the translatable plate is suitable for lifting several pieces contemporarily, but on account of the presence of the partition, for example of the inclination or positioning of its upper flap, a quantity of the aforesaid pieces reaches the unloading area before the others. This way the pieces fall, by means of the force of gravity, into the unloading area in a further controlled manner.

In both the ways mentioned above the singularisation is also due to the physical characteristics of the obstruction element, or to its relative movement in relation to the translatable means.

Advantageously the partition is easy to produce and handle; in fact it is very easy to move it given its non-prohibitive dimensions.

For example the partition is adjustable and movable with leverage systems or by means of a cam element, or again, in more elaborate solutions, by an electric motor.

Advantageously the use of an electric motor makes this connectable to the control means which move the translatable support means. In such embodiment unloading is adjustable both by changing the speed of the translatable support means and by changing the position of the partition.

Advantageously in a further embodiment, rather than the obstruction element having a particular shape or movement, the translatable support means are suitable for favouring the falling of some lifted pieces before others.

In other words, advantageously it is in fact the translatable plate which has a shape wherein a first quantity of pieces is suitable for falling, once lifted, before other pieces into the unloading area.

Advantageously all the advantages listed above as regards the solution relative to the obstruction element, regardless of its embodiment, are achievable by a special embodiment of the translatable support means.

A person skilled in the art may make variations to the embodiments of the lifting machine described above or replace elements with others functionally equivalent so as to satisfy specific requirements.

For example in a preferred embodiment the fixed plate is suitable for being adjusted, for example in rotation, by means of a special movement system, the functioning of which is analogous to the movement of the partition described above.

In further embodiments in fact the loading and/or unloading area of the pieces is obtained, as needed, by means of electronically controllable conveyor belts in such a way as to further regulate both the unloading and loading of the pieces.

Advantageously this way the pieces may be loaded and/or unloaded in such a way as to minimise as far as possible the impacts on said pieces. For example in these cases as opposed to the classic hopper or classic conveyor belt a belt hopper is fittable to constitute the loading area.

Advantageously in addition, the conveyor belts are electronically connectable to all the electronic elements present in the lifting machine by means of special junction boxes. For example this way the loading conveyor belt is operable according to the findings of the detection means.

Such variants are also included within the sphere of protection as defined by the following claims.

Moreover, each variant described as belonging to a possible embodiment may be realised independently of the other variants.

## Claims

1. Lifting machine (10) on a piece processing line associable with a loading area suitable for receiving parts to be lifted and an unloading area, located higher up than the loading area, for unloading the pieces lifted by the machine, comprising:
- translatable support means suitable for supporting at least one piece and for translating between a loading and unloading position in relation to the height of the loading area and the height of the unloading area, wherein the translatable support means consists in one translatable plate (20), positioned in a substantially vertical position;
- an obstruction element at the unloading area suitable for obstructing the unloading or falling of pieces lifted by the translatable support means, to the unloading area wherein the obstruction element comprises one fixed plate (30), positioned in a substantially vertical position;
- movement means suitable for moving the translatable support means;
- control means suitable for controlling the movement means;
- detection means, operatively connected to the control means, suitable for detecting the presence of lifted pieces in the unloading area and sending a detection signal to the control means,
wherein the control means are programmed for controlling the movement means to move the translatable support means into the unloading position depending on the detection signal; and
wherein the movement means are suitable for stopping the translatable support means in an intermediate position between the loading position and the unloading position respectively at a height between the height of the loading area and the height of the unloading area, in which falling of the pieces is prevented by the obstruction element;
the lifting machine (10) is **characterized by** the fact that movement means are suitable for stopping the translatable support means in an incipient unloading position, near the unloading area, last position in which a piece lifted by the translatable support means is prevented from falling into the unloading area by the obstruction element, on command of the control means when the detection means detect a condition of presence of mechanical pieces;
and the movement means are suitable for resuming from said incipient unloading position the movement of the pieces depending on how said condition changes.

2. Lifting machine (10) according to the previous claim, wherein, in the unloading position, the translatable support means are suitable for allowing or encouraging falling of the piece into the unloading area.

3. Lifting machine (10) according to any of the previous claims, wherein the obstruction element is suitable for allowing or encouraging falling of the piece from the translatable support means into the unloading area.

4. Lifting machine (10) according to any of the previous claims, wherein the movement means comprise an electric motor (50).

5. Lifting machine (10) according to any of the previous claims, comprising a frame (11) consisting of vertical uprights (12) and crossbars (13), wherein the translatable support means are supported at the sides by two vertical uprights (12) composing the frame (11).

6. Lifting machine (10) according to the claims 4 and 5, wherein the electric motor (50) is mounted laterally, for example above, to a vertical upright (12).

7. Lifting machine (10) according to claim 6, wherein the movement means comprise transmission means of the motion of the electric motor to the translatable support means, said transmission means being housed in the vertical uprights (12).

8. Lifting machine (10) according to any of the previous claims, wherein said detection means comprise artificial viewing means such as telecameras or the like, or laser systems, encoders, photo cells etc.

9. Lifting machine (10) according to any of the previous claims, wherein the obstruction element comprises at least one partition (80), positioned in a substantially vertical position, having an upper flap (81), which can be positioned so as to have some areas suitable for blocking, or obstructing, unloading or falling of the pieces and other areas which permit such.

10. Lifting machine (10) according to claim 9, wherein the upper portion (81) comprises a fulcrum area (81') and an obstruction area (81") positionable at different heights from each other, respectively the former at a lower height from the other, where the pieces are free to fall.

11. Lifting machine (10) according to claim 10, wherein the partition (80) is suitable for being moved in such a manner that the fulcrum area (81') reaches, or has, as maximum height the unloading height, while the obstruction area (81") reaches a higher height.

12. Apparatus (1) of a processing line' of pieces comprising:
- a lifting machine (10) according to any of the previous claims;
- a loading area suitable for receiving pieces to be lifted; and
- an unloading area, located higher up than the loading area, and suitable for receiving the pieces lifted to said height.

13. Apparatus (1) of a processing line of pieces comprising:
- a lifting machine (10) according to any of the claims from 1 to 11;
- a hopper (2), or a conveyor belt, which forms the loading area suitable for receiving the pieces to be lifted.

14. Apparatus (1) of a processing line of mechanical pieces comprising:
- a lifting machine (10) according to any of the claims from 1 to 11;
- a chute (3) or a conveyor belt which forms the unloading area located higher up than the loading area.

15. Apparatus (1) according to any of the claims from 12 to 14, comprising recovery means suitable for making the pieces fall back from the unloading area to the loading area.

16. Method of transport of pieces on a processing line comprising the steps of:
- receiving from a pieces loading area;
- detecting by detection means the presence of pieces in an unloading area, in such a way that said detection means send a detection signal of a condition of presence or absence of mechanical pieces;
- moving the pieces received from the loading area, from the height of said loading area to the height of the unloading area depending on the detection signal;
- stopping the movement of the pieces in an incipient unloading position, near the unloading area, last position in which a piece lifted by the translatable support means is prevented from falling into the unloading area by the obstruction element, if the condition of presence or absence of mechanical pieces is detected by the detection means;
- resuming from said incipient unloading position the movement of the pieces depending on how said condition changes.

## Patentansprüche

1. Hebemaschine (10) an einer Stückverarbeitungsstraße, die mit einem Lade-bereich, der geeignet ist, Teile zu empfangen, die anzuheben sind, und einem Entladebereich verbindbar ist, der sich höher befindet als der Ladebereich, zum Entladen der Stücke, die von der Maschine angehoben werden, umfas-send:
- verschiebbare Stütz- bzw. Trägermittel, die geeignet sind, zumindest ein Stück zu stützen bzw. zu tragen und zwischen einer Lade- und einer Ent-ladeposition in Relation zu der Höhe des Ladebereichs und der Höhe des Entladebereichs zu verschieben, wobei die verschiebbaren Stütz- bzw. Trägermittel aus einer verschiebbaren Platte (20) bestehen, die in einer im Wesentlichen vertikalen Position positioniert ist;
- ein Sperrelement an dem Entladebereich, das geeignet ist, das Entladen oder Fallen von Stücken, die von den verschiebbaren Stütz- bzw. Träger-mittel angehoben werden, zu dem Entladebereich zu verperren, wobei das Sperrelement an dem Entladebereich eine feste bzw. fixierte Platte (30) umfasst, die in einer im Wesentlichen vertikalen Position positioniert ist;
- Bewegungsmittel, die geeignet sind, die verschiebbaren Stütz- bzw. Trä-germittel zu bewegen;
- Steuer- bzw. Regelmittel, die geeignet sind, die Bewegungsmittel zu steu-ern bzw. zu regeln;
- Detektionsmittel, die operativ mit den Steuer- bzw. Regelmitteln verbunden sind und geeignet sind, das Vorhandensein von angehobenen Stücken in dem Entladebereich zu detektieren und ein Detektionssignal an die Steuer- bzw. Regelmittel zu senden,
wobei die Steuer- bzw. Regelmittel programmiert sind zum Steuern bzw. Re-geln der Bewegungsmittel dahingehend, die verschiebbaren Stütz- bzw. Trä-germittel in die Entladeposition zu bewegen, und zwar abhängig von dem Detektionssignal; und
wobei die Bewegungsmittel geeignet sind, die verschiebbaren Stütz- bzw. Trägermittel in einer Zwischenposition zwischen der Ladeposition und der Entladeposition jeweils auf einer Höhe zwischen der Höhe des Ladebereichs und der Höhe des Entladebereich zu stoppen, in der ein Fallen der Stücke durch das Sperrelement verhindert wird;
die Hebemaschine (10) durch die Tatsache gekennzeichnet ist, dass Bewe-gungsmittel geeignet sind, die verschiebbaren Stütz- bzw. Trägermittel in einer Anfangsentladeposition nahe dem Entladebereich, letzte Position, in der ein von den verschiebbaren Stütz- bzw. Trägermittel angehobenes Stück von dem Sperrelement daran gehindert wird, in den Entladebereich zu fallen, auf Befehl des Steuer- bzw. Regelmittels zu stoppen, wenn die Detektionsmittel einen Zustand des Vorhandenseins von mechanischen Stücken detektieren;
und die Bewegungsmittel geeignet sind, von der Anfangsentladeposition die Bewegung der Stücke abhängig davon, wie sich der Zustand ändert, wieder aufzunehmen.

2. Hebemaschine (10) nach dem vorhergehenden Anspruch, wobei, in der Ent-ladeposition, die verschiebbaren Stütz- bzw. Trägermittel geeignet sind, ein Fallen des Stücks in den Entladebereich zu erlauben oder zu unterstützen.

3. Hebemaschine (10) nach einem der vorhergehenden Ansprüche, wobei das Sperrelement geeignet ist, ein Fallen des Stücks von den verschiebbaren Stütz- bzw. Trägermitteln in den Entladebereich zu erlauben oder zu unter-stützen.

4. Hebemaschine (10) nach einem der vorhergehenden Ansprüche, wobei die Bewegungsmittel einen Elektromotor (50) umfassen.

5. Hebemaschine (10) nach einem der vorhergehenden Ansprüche, umfassend einen Rahmen (11), der aus Pfosten (12) und Querbalken (13) besteht, wobei die verschiebbaren Stütz- bzw. Trägermittel an den Seiten durch zwei vertikale Pfosten (12) gestützt bzw. getragen sind, die den Rahmen (11) bilden.

6. Hebemaschine (10) nach Anspruch 4 und 5, wobei der Elektromotor (50) late-ral an einem vertikalen Pfosten (12), beispielsweise darüber, montiert ist.

7. Hebemaschine (10) nach Anspruch 6, wobei die Bewegungsmittel Übertra-gungsmittel für die Bewegung des Elektromotors auf die verschiebbaren Stütz- bzw. Trägermittel umfassen, wobei die Übertragungsmittel in den vertikalen Pfosten (12) untergebracht sind.

8. Hebemaschine (10) nach einem der vorhergehenden Ansprüche, wobei die Detektionsmittel künstliche Beobachtungsmittel, wie Fernsehkameras oder dergleichen, oder Lasersysteme, Encoder, Photozellen etc. umfassen.

9. Hebemaschine (10) nach einem der vorhergehenden Ansprüche, wobei das Sperrelement zumindest eine Trennung (80) umfasst, die in einer im Wesent-lichen vertikalen Position positioniert ist und eine obere Klappe (81) aufweist, die so positioniert sein kann, dass sie einige Bereiche aufweist, die zum Ver-sperren oder Blockieren des Entladens oder Fallens der Stücke geeignet sind, und andere Bereiche aufweist, die ein solches erlauben.

10. Hebemaschine (10) nach Anspruch 9, wobei der obere Abschnitt (81) einen Drehpunktbereich (81') und einen Sperrbereich (81") umfasst, die auf unter-schiedlichen Höhen zueinander positionierbar sind, jeweils der vorigere auf einer niedrigeren Höhe als der andere, wo die Stücke frei fallen können.

11. Hebemaschine (10) nach Anspruch 10, wobei die Trennung (80) geeignet ist, auf eine solche Weise bewegt zu werden, dass der Drehpunktbereich (81') die Entladehöhe als maximale Höhe erreicht oder aufweist, während der Sperr-bereich (81") eine höhere Höhe erreicht.

12. Vorrichtung (1) einer Stückverarbeitungsstraße, umfassend:
- eine Hebemaschine (10) nach einem der vorhergehenden Ansprüche;
- einen Ladebereich, der geeignet ist, Teile zu empfangen, die anzuheben sind; und
- einen Entladebereich, der sich höher befindet als der Ladebereich und zum Empfangen der Stücke geeignet ist, die auf die Höhe angehoben werden.

13. Vorrichtung (1) einer Stückverarbeitungsstraße, umfassend:
- eine Hebemaschine (10) nach einem der Ansprüche 1 bis 11;
- einen Beschickungsbehälter bzw. Trichter, oder Förderband (2), der bzw. das den Ladebereich bildet, der zum Empfangen der anzuhebenden Stücke geeignet ist.

14. Vorrichtung (1) einer Verarbeitungsstraße für mechanische Stücke, umfas-send:
- eine Hebemaschine (10) nach einem der Ansprüche 1 bis 11;
- eine Rutsche (3) oder eine Förderband, die bzw. das den Entladebereich bildet, der sich höher befindet als der Ladebereich.

15. Vorrichtung (1) nach einem der Ansprüche 12 bis 14, umfassend Rückgewin-nungsmittel, die geeignet sind die Stücke zu veranlassen, aus dem Entlade-bereich in den Ladebereich zurückzufallen.

16. Verfahren zum Transportieren von Stücken auf einer Verarbeitungsstraße, umfassend die Schritte:
- Empfangen aus bzw. von einem Stückladebereich;
- Detektieren, durch Detektionsmittel, des Vorhandenseins von Stücken in einem Entladebereich auf eine solche Weise, dass die Detektionsmittel ein Detektionssignal eines Zustands des Vorhandenseins oder der Abwesenheit von mechanischen Stücken aussenden;
- Bewegen der aus dem Ladebereich empfangenen Stücke von der Höhe des Ladebereichs zu der Höhe des Entladebereichs in Abhängigkeit von dem Detektionssignal;
- Stoppen der Bewegung der Stücke in einer Anfangsentladeposition nahe dem Entladebereich, letzte Position, in der ein von den verschiebbaren Stütz- bzw. Trägermittel angehobenes Stück von dem Sperrelement daran gehindert wird, in den Entladebereich zu fallen, wenn der Zustand des Vor-handenseins oder der Abwesenheit von mechanischen Stücken von den Detektionsmitteln detektiert wird;
- Wiederaufnehmen, von bzw. aus der Anfangsentladeposition, der Bewe-gung der Stücke abhängig davon, wie sich der Zustand ändert.

## Revendications

1. Machine de levage (10) sur une ligne de traitement de pièces, pouvant être associée à une zone de chargement appropriée pour recevoir des parties à lever et une zone de déchargement, positionnée plus haut que la zone de chargement, pour décharger les pièces levées par la machine, comprenant :
des moyens de support translatables appropriés pour supporter au moins une pièce et pour effectuer un mouvement de translation entre une position de chargement et de déchargement par rapport à la hauteur de la zone de chargement et la hauteur de la zone de déchargement, dans laquelle les moyens de support translatables se composent d'une plaque translatable (20) positionnée dans une position sensiblement verticale ;
un élément d'obstruction au niveau de la zone de déchargement approprié pour obstruer le déchargement ou
la chute des pièces levées par les moyens de support translatables, jusqu'à la zone de déchargement, dans laquelle les élément d'obstruction comprennent une plaque fixe (30) positionnée dans une position sensiblement verticale ;
des moyens de déplacement appropriés pour déplacer les moyens de support translatables ;
des moyens de commande appropriés pour commander les moyens de déplacement ;
des moyens de détection, raccordés de manière opérationnelle aux moyens de commande, appropriés pour détecter la présence des pièces levées dans la zone de déchargement et envoyer un signal de détection aux moyens de commande,
dans laquelle les moyens de commande sont programmés pour commander les moyens de déplacement afin de déplacer les moyens de support translatables dans la position de déchargement en fonction du signal de détection ; et
dans laquelle les moyens de déplacement sont appropriés pour arrêter les moyens de support translatables dans une position intermédiaire entre la position de chargement et
la position de déchargement respectivement à une hauteur entre la hauteur de la zone de chargement et la hauteur de la zone de déchargement, dans laquelle la chute des pièce est empêchée par l'élément d'obstruction ;
la machine de levage (10) est **caractérisée en ce que** les moyens de déplacement sont appropriés pour arrêter les moyens de support translatables dans une position de déchargement naissante, à proximité de la zone de déchargement, dernière position dans laquelle on empêche la chute d'une pièce levée par les moyens de support translatables dans la zone de déchargement par l'élément d'obstruction, sur commande des moyens de commande lorsque les moyens de détection détectent une condition de présence de pièces mécaniques ;
et les moyens de déplacement sont appropriés pour poursuivre à partir de la position de déchargement naissante, le déplacement des pièces en fonction de la manière dont ladite condition change.

2. Machine de levage (10) selon la revendication précédente, dans laquelle, dans la position de déchargement, les moyens de support translatables sont appropriés pour permettre ou encourager la chute de la pièce dans la zone de déchargement.

3. Machine de levage (10) selon l'une quelconque des revendications précédentes, dans laquelle l'élément d'obstruction est approprié pour permettre ou encourager la chute de la pièce à partir des moyens de support translatables dans la zone de déchargement.

4. Machine de levage (10) selon l'une quelconque des revendications précédentes, dans laquelle les moyens de déplacement comprennent un moteur électrique (50).

5. Machine de levage (10) selon l'une quelconque des revendications précédentes, comprenant un bâti (11) se composant de montants verticaux (12) et de traverses (13), dans laquelle les moyens de support translatables sont supportés sur les côtés par deux montants verticaux (12) composant le bâti (11).

6. Machine de levage (10) selon les revendications 4 et 5, dans laquelle le moteur électrique (50) est monté latéralement, par exemple au-dessus, sur un montant vertical (12).

7. Machine de levage (10) selon la revendication 6, dans laquelle les moyens de déplacement comprennent des moyens de transmission du mouvement du moteur électrique aux moyens de support translatables, lesdits moyens de transmission étant logés dans les montants verticaux (12).

8. Machine de levage (10) selon l'une quelconque des revendications précédentes, dans laquelle lesdits moyens de détection comprennent des moyens d'observation artificiels tels que des caméras ou similaires ou des systèmes laser, des encodeurs, des cellules photoélectriques, etc.

9. Machine de levage (10) selon l'une quelconque des revendications précédentes, dans laquelle l'élément d'obstruction comprend au moins une séparation (80), positionnée dans une position sensiblement verticale, ayant un rabat supérieur (81), qui peut être positionné afin d'avoir certaines zones appropriées pour bloquer, ou obstruer, charger ou laisser tomber les pièces et d'autres zones qui le permettent.

10. Machine de levage (10) selon la revendication 9, dans laquelle la partie supérieure (81) comprend une zone de point d'appui (81') et une zone d'obstruction (81") pouvant être positionnées à des hauteurs différentes l'une de l'autre, respectivement la première à une hauteur plus basse que l'autre, dans laquelle les pièces sont libres de tomber.

11. Machine de levage (10) selon la revendication 10, dans laquelle la séparation (80) est appropriée pour être déplacée de sorte que la zone de point d'appui (81') atteint ou a, en tant que hauteur maximum, la hauteur de déchargement, alors que la zone d'obstruction (81") atteint une hauteur plus haute.

12. Appareil (1) d'une ligne de traitement de pièces comprenant :
une machine de levage (10) selon l'une quelconque des revendications précédentes ;
une zone de chargement appropriée pour recevoir des pièces à lever ; et
une zone de déchargement, positionnée plus haut que la zone de chargement et appropriée pour recevoir les pièces levées à ladite hauteur.

13. Appareil (1) d'une ligne de traitement de pièces comprenant :
une machine de levage (10) selon l'une quelconque des revendications 1 à 11 ;
une trémie (2) ou une courroie transporteuse qui forme la zone de chargement appropriée pour recevoir les pièces à lever.

14. Appareil (1) d'une ligne de traitement de pièces mécaniques, comprenant :
une machine de levage (10) selon l'une quelconque des revendications 1 à 11 ;
une goulotte (3) ou une courroie transporteuse qui forme la zone de déchargement positionnée plus haut que la zone de chargement.

15. Appareil (1) selon l'une quelconque des revendications 12 à 14, comprenant des moyens de récupération appropriés pour refaire tomber les pièces de la zone de déchargement sur la zone de chargement.

16. Procédé pour transporter des pièces sur une ligne de traitement, comprenant les étapes consistant à:
recevoir des pièces d'une zone de chargement ;
détecter par des moyens de détection, la présence de pièces dans une zone de déchargement, de sorte que lesdits moyens de détection envoient un signal de détection d'une condition de présence ou d'absence des pièces mécaniques ;
déplacer les pièces reçues de la zone de chargement, de la hauteur de ladite zone de chargement à la hauteur de la zone de déchargement en fonction du signal de détection ;
arrêter le déplacement des pièces dans une position de déchargement naissante, à proximité de la zone de déchargement, dernière position dans laquelle on empêche la chute d'une pièce levée par les moyens de support translatables dans la zone de déchargement par l'élément d'obstruction, si la condition de présence ou d'absence des pièces mécaniques est détectée par les moyens de détection ;
poursuivre à partir de ladite position de déchargement naissance, le déplacement des pièces en fonction de la façon dont ladite condition change.
